# EUROPEAN PATENT APPLICATION

(11) **EP 3 493 349 A1**
(43) Date of publication of application: **05.06.2019**
(21) Application number: 17382823.7
(22) Date of filing: 01.12.2017
(51) Int. Cl.: H02J 3/00

(54) **ELECTRICAL ENERGY OPTIMAL ROUTING METHOD BETWEEN A SOURCE NODE AND A DESTINATION NODE OF A PEER-TO-PEER ENERGY NETWORK AND SYSTEM**

(71) Applicant: Telefonica Innovacion Alpha S.L, 28013 Madrid (ES)
(72) Inventor: Phoel, Wayne, 28013 Madrid (ES); Pilaszanovich, Jakab, 28013 Madrid (ES); García Mendoza - Sánchez, Armando Antonio, 28013 Madrid (ES); Rodriguez Rodriguez, Pablo, 28013 Madrid (ES); Stalling, Lars, 28013 Madrid (ES)
(74) Representative: Carlos Hernando, Borja

(57) **Abstract**

The method comprises gathering, by each node of a plurality of nodes of an energy network, a set of energy statistics of each node, the set of energy statistics including information about losses in the node caused by the electrical components and connections and/or by voltage and/or current conversions occurring in the node; communicating, by each node, the gathered set of energy statistics to a computing system located in at least one node of the plurality of nodes; and computing, by the computing system, a routing decision for transfer an amount of electrical energy from a source node to a destination node based on the communicated set of energy statistics of all the nodes, on data identifying the source node, on data identifying the destination node, on data about the amount of electrical energy to be transferred and on data about a time by which the electrical energy needs to be transferred.

## Description

### Field of the invention

The present invention generally relates to distributed energy networks. In particular, present invention relates to an electrical energy optimal routing method, and corresponding system, between a source node and a destination node of a peer-to-peer energy network, in which said energy network is adapted for the distribution of electrical energy, i.e. the nodes included in the energy network are connected in such a way that electrical energy can flow among them.

### Background of the invention

Document "Trading on local energy markets: A comparison of market designs and bidding strategies", Esther Mengelkamp et al. Published in: European Energy Market (EEM), 2017 14^{th}, introduces a local market which allows prosumers and consumers (in short: agents) to trade electricity directly within their community at variable prices. The market aims at facilitating a local balance of energy supply and demand. We present and compare two market designs, a direct peer-to-peer (P2P) market and a centralized order book market, with the objective of assessing which design is best suited for a local electricity market. In every time slot, each buying consumer is randomly paired with selling prosumers in an iterative fashion until she has procured all of her electricity or has been paired with all potential sellers. The problem formulation does not allow for prioritization of different users or loads, different levels of service, or fairness.

European patent EP-B1-2430723 addresses trading between nodes and discusses routing and forwarding of what they call energy packets. An end-to-end route through the networks is determined and a specific amount of electricity is contracted to flow over that route. The patent refers to a separate transport plane and control plane, but it is restricted to the routing protocol and is presented as corresponding packets in the network, one that contains route information and one that contains the energy to be transferred. This patent requires energy to be "packetized." Addition or removal of nodes is addressed only through the routing protocol's ability to adapt to changing network topologies. Discovery of sources and destinations is not explicitly addressed. There is an example of scheduling use of a laundry machine, but it is limited to specifying a later time when energy is expected to be lower cost. The energy transaction is scheduled for the later time and the laundry is powered when that energy arrives.

In low-income regions, viable solutions need to consider costs of every component. Most of the systems considered in the prior art don't worry about costs of wires, and are not so concerned about transmission and conversion losses, however these can have a significant effect on the optimization in low-margin electricity networks.

In addition, most systems considered assume there is some access to the conventional grid and the renewables are only preferred as lower cost alternatives when available. But, in developing regions, there may not be access to any centralized utility and not having that back-up significantly changes the decisions in how to schedule electricity distribution, including greater emphasis on prioritization and different levels of service.

The systems that have been proposed for complete disconnection from traditional power grids replicate that centralized architecture on a smaller scale and do not trade energy among users.

More solutions are therefore needed for determining the best route for energy flow through a distributed energy network.

### Description of the Invention

Embodiments of the present invention provide according to an aspect an electrical energy optimal routing method between a source node and a destination node of a peer-to-peer energy network, wherein said energy network is adapted for the distribution of electrical energy and comprises a plurality of connected nodes, and wherein each node comprises one or more devices including electrical energy loads and electrical components and connections for permitting the distribution of the electrical energy with other nodes of the energy network.

The proposed method comprises gathering, by each node of the plurality of nodes of the energy network, a set of energy statistics of each node, such as information about losses in the node caused by the electrical components and connections and/or by voltage and/or current conversions occurring in the node; communicating, by each node, the gathered set of energy statistics to a computing system; and computing, by the computing system, a routing decision for transfer an amount of electrical energy from a source node of the electrical energy to a destination node.

According to the proposed method, the routing decision is computed based on the communicated set of energy statistics of all the nodes, on data identifying the source node, on data identifying the destination node, on data about the amount of electrical energy to be transferred and on data about a time by which the electrical energy needs to be transferred.

In an embodiment, the computing system is located in each of the nodes of the plurality of nodes. Alternatively, the computing system is located in only one of the nodes or in a remote site. In this last case, the computing system further notifies the rest of the nodes of the energy network of the computed routing decision.

In an embodiment, each node may further calculate a prediction function determining when the source node will have electrical energy available and when the destination node will have demand.

In an embodiment, the one or more devices further include electrical energy storage elements such as batteries and/or capacitors. In this case, the set of energy statistics further include information about a current storage level and/or storage capacity of the node.

Moreover, the set of energy statistics may also include information about costs including costs charged by each node for forwarding and/or storing electrical energy. Besides, the set of energy statistics may also include information about an estimated storage level for future times and/or a future scheduled trade.

In an embodiment, the set of energy statistics is communicated via a wireless communication network. Alternatively, the set of energy statistics is communicated via the electrical connections over which electrical energy is transferred.

The set of energy statistics can be communicated every a certain configurable period of time, whenever updated energy statistics are gathered in each node or upon each node having received a specific request for transferring the amount of electrical energy from the source node to the destination node.

In an embodiment, the electrical energy transfer is quantified at a specific rate.

In an embodiment, the routing decision is further computed based on an optimization criterion defined by the computing system, said optimization criterion including reducing losses experienced over the route(s) the electrical energy will flow, including losses experienced over the electrical connections as well as at nodes the energy traverses, and/or reducing the costs incurred in the transfer.

Moreover, the routing decision can be further computed by considering one or more of the following criteria: satisfying the electrical energy demand by using multiple different routes through the energy network; using storage at intermediary node(s) of the energy network to act as a temporal buffer to reduce costs of congestion; delaying a start of electrical energy transmission to reduce costs of congestion; and/or pre-fetching electrical energy and storing at the destination node until needed.

In an embodiment, the gathered set of energy statistics are stored in a memory or database before being communicated.

Embodiments of the present invention also provide according to another aspect a system configured to perform the method embodiment steps and operations summarized above and disclosed in detail below.

In particular, the proposed system has a plurality of connected nodes of an energy network adapted and configured to distribute energy between them, preferably electrical energy, and each comprising one or more devices including energy loads, among others. Moreover, the proposed system also includes at least one computing system.

The computing system is adapted and configured to compute a routing decision for transfer an amount of electrical energy from a source node of the electrical energy to a destination node based on a set of energy statistics of all the nodes, on data identifying the source node, on data identifying the destination node, on data about the amount of electrical energy to be transferred and on data about a time by which the electrical energy needs to be transferred.

In the proposed system, the loads may include lighting systems and/or appliances including televisions, radios, kitchen appliances, and refrigerators and/or heating equipment, among others. In addition, in the proposed system, the one or more devices may further include electrical energy generation elements such as solar panels, wind turbines, diesel generation systems, geothermal systems, a human-powered crank generator, etc. and/or electrical energy storage elements such as batteries or capacitors.

The computing system may be distributed among all the nodes of the plurality of nodes, i.e. each node comprising one computing system.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

Present invention enables a much more efficient distribution of electrical energy (or electricity) in a resource-constrained, peer-to-peer network that cannot rely on a major power grid for backup. In addition, in a cost-constrained situation, as is encountered in developing communities, the invention enables a much more flexible allocation of the resources. Specifically, the invention enables a scalable, self-sufficient network of distributed generation, storage, and loads, without access to a conventional centralized power grid, and it optimizes performance in scenarios in which component losses (wires, voltage conversion, etc.) can be significant factors.

### Brief Description of the Drawings

The previous and other advantages and features will be more fully understood from the following detailed description of embodiments, with reference to the attached drawings, which must be considered in an illustrative and non-limiting manner, in which:
Fig. 1 illustrates the three main components of the invention to performing optimal electrical energy routing in the peer-to-peer energy network.
Fig. 2 illustrates an example of the different energy statistics that can be communicated by the nodes and the parameters considered by the computing system to execute the route decision calculation, according to an embodiment of the present invention.
Fig. 3 schematically illustrates an example of using multiple routes for the electrical energy transfer.
Fig. 4 illustrates an example configuration of the peer-to-peer energy network.

### Detailed Description of the Invention and of Preferred Embodiments

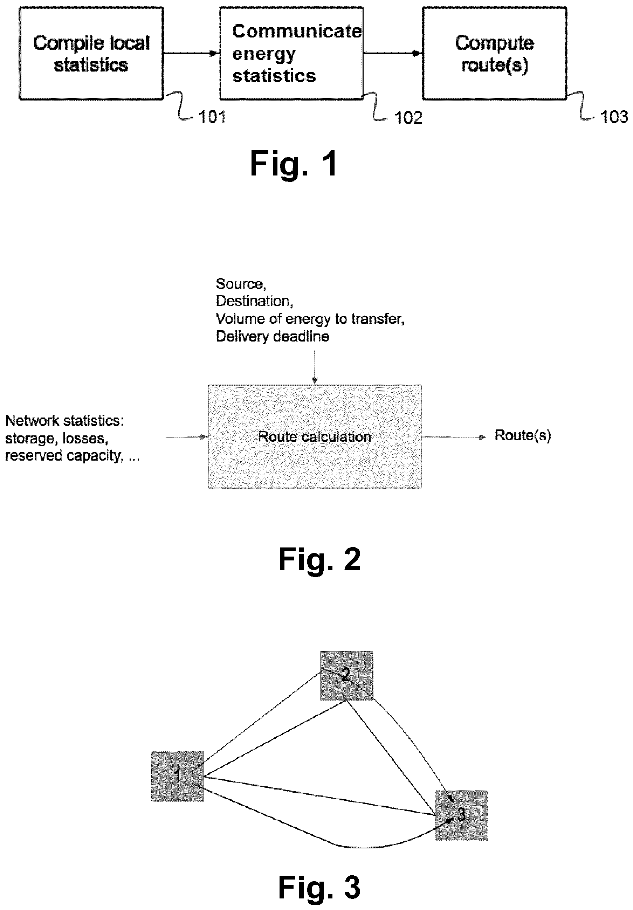

Present invention optimizes routing of electrical energy in a peer-to-peer energy trading network. Fig. 1 illustrates the three main components for the electrical energy optimal routing. Each node of the energy network compiles/gathers 101, and optionally stores, in a memory or database, relevant energy statistics of the node such as information about losses in the node caused by the electrical components and connections (e.g. wires) and/or by voltage and/or current conversions occurring in the node. Then, nodes communicate 102 all or subsets of the gathered energy statistics to a computing system, which can then, calculate 103 a routing decision based on optimal routes.

The computing system which comprises one or more processing units and at least one memory, can be centralized in only one of the nodes of the energy network, or can be distributed in all the nodes of the energy network (i.e. included in each of the nodes). Even, the computing system could be centralized in a remote site, distant from the nodes. In case of the centralized option, the computer system computes the routing decision and notifies all the rest of the nodes of the routing decision calculated.

The energy statistics may also include those such as a current/actual storage level, storage capacity, etc. Even, in more complex implementations, the energy statistics may also include an estimated storage level for future times and/or future scheduled trades. They may also include values such as the costs charged for forwarding and/or storing electrical energy.

Before routes can be computed, the energy statistics that are collected locally at each node are shared, or communicated, in order to build a picture of the overall energy network potential for supporting the desired electrical energy transfer. Not all statistics that are collected are necessary to communicate; what is communicated depends on the capacity of the communication network used and the algorithms used to calculate the routing decision. The specific communication network used is not relevant here (it can use the existing connections over which energy is transferred, or a separate network such as a wireless network); the approach here is adaptable.

The way in which energy statistics are communicated can be proactive such that energy statistics are sent to neighbor nodes either as they are updated or on a defined schedule (i.e. a certain configurable period of time). Nodes also share a subset of the energy statistics received from neighbor nodes with others who have not received them. These energy statistics are communicated in order to create a (potentially incomplete) picture of the energy network state at each node, independent of any specific requests for electrical energy transfer. Alternatively, the energy statistics can be communicated in a reactive way, such that a specific request for electrical energy transfer from a source to destination prompts the distribution of the energy statistics. Only energy statistics that are directly related to the transfer from the desired source to the desired destination are communicated.

Once the nodes communicate the relevant energy statistics, see Fig. 2, the routing decision (i.e. the route(s)) can be computed for transfer of desired electrical energy amount. The specific calculation requires knowing the source node, the destination node, the amount of electrical energy to be transferred and the time by which that electrical energy needs to be transferred. Alternatively, the electrical energy transfer can be quantified as a specific rate at which to send the electrical energy in a specified time period.

The calculation may also depend on a specified optimization criterion. The optimization criterion can be to minimize losses experienced over the path(s) the electrical energy will flow, which includes both the losses experienced over links as well as at nodes the electrical energy traverses. Alternatively, a different optimization criterion can be to minimize the costs incurred in the transfer. Note in this case, when losses are not insignificant, in order for the destination to receive the desired amount of energy, more energy than that must be sent from the source to offset that which is lost in transmission. The cost of that excess electrical energy sent is included in the overall route cost, as well as costs intermediary nodes charge for forwarding or string electrical energy as part of the electrical energy transfer.

The different options used for potential routes to compare as part of the optimization may include: satisfying the electrical energy demand by using multiple, different routes through the energy network; using storage at intermediary node(s) to act as a temporal buffer to reduce costs of congestion; delaying the start of transmission to reduce costs of congestion; and/or pre-fetching electrical energy and storing at the destination node until needed. One, none, or a combination of the above options can be used to find the optimal route(s).

An example of using multiple routes is shown in Fig. 3. Because losses in wires increase with increased current through them, by splitting the flow over multiple routes reduces the current in each route, and therefore reduces the losses in those wires (assuming no other flows are flowing through the wires). The intermediate node (node 2) in the figure may introduce extra loss, or other costs, so the multiple routes may not be preferred, but if that cost/loss is low compared to the cost of going directly from 1 to 3, it can be beneficial.

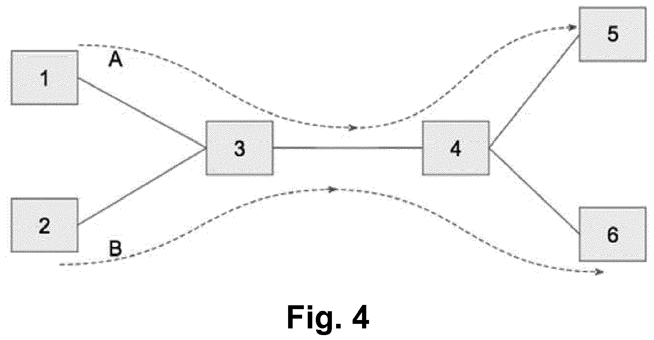

Because multiple nodes may transfer electrical energy at the same time in the energy network, it is possible that two different electrical energy flows want to use the same link at the same time. That may cause congestion in the energy network. It may increase the current over the wire greater than the safety limit, or it may create losses greater than desired. Based on the delivery requirements and priority of each flow, each set of nodes determine the best way to satisfy their demands. If one or more of the nodes can satisfy their needs by delaying transmission over part of the route, they can use storage at intermediate nodes to enable the highest possible efficiency for each step in the route. An example is shown in Fig. 4. In said figure, flow A has a long time (e.g. several hours) to transfer a moderate amount of electrical energy. After flow A has been reserved, flow B is initiated with a short time (e.g. several minutes) to transfer a large amount of electrical energy. Flow B increases the current on the link from Node 3 to Node 4, increasing the losses as well. In order to reduce losses on the link from Node 1 to Node 3, flow A continues to send electrical energy to Node 3, storing electrical energy in a battery. When flow B ends, flow A continues sending at the original rate from Node 1 to Node 3, and at an increased rate from Node 3 to Node 6, by way of Node 4.

The routing decisions are not just affected by other flows, but also by the state of electrical energy production and storage. An example, an considering also Fig. 4, refers to the case in which due to congestion on a link on the route and full storage at a key node, the electrical energy from the source is temporarily stored at the source node until the route cost (in this case losses due to congestion) decreases. According to Fig. 4, flow B is initiated with a short time (e.g. several minutes) to transfer a large amount of electrical energy. Flow B causes a large current on the link from Node 3 to Node 4, increasing losses. Shortly after flow B has started, Flow A is initiated with a long time (e.g. several hours) to transfer a moderate amount of electrical energy. A battery at Node 3 is full to capacity and cannot accept any more electrical energy. A solar panel at Node 1 flows electrical energy into Node 1's battery until flow B ends. When flow B ends, flow A begins sending at the optimal rate, taking electrical energy from both the battery and solar panel at Node 1, through Nodes 3 and 4, and on to Node 6.

It may also be that the time at which a node expects to need electrical energy, either it knows that electrical energy will not be freely available (e.g. solar energy at night), or the cost will be high. But, prior to the need, electrical energy is available and affordable. Then the node with the future demand can arrange to transfer some or all of the electrical energy it needs in advance. In that case, the receiving node must store the energy locally until the time comes when it will be used by that node.

Present invention considers electrical energy transfers as continuous flows through the energy network. The invention can apply to electrical energy "packets," but it works in the general case, unconstrained by an arbitrary "packet size."

One way in which the routing function can be implemented is in combination with a separate scheduling and prediction process. In that process, nodes predict when sources will have electrical energy available and when destinations will have demand. The scheduling system then attempts to fulfill electrical energy needs by matching destinations to sources in a way that considers congestion in the energy network and multiple flows over the same links. In that system design, the routing functions described here are called as part of the scheduling function. Once a potential source is identified for a particular destination's demand, the routing function determines what flows over what links satisfy the need. Multiple alternative solutions are then used by the scheduling function to reserve resources.

In that instantiation, it may be that flows have already been scheduled. The computing system may benefit from revising previously reserved resources to meet the new demands. In that case, the scheduler can go back and reschedule already scheduled flows if it aids the optimization of new flow. The computing system then updates the state at other nodes, including statistics such as trading estimates/predictions, and potentially storage data.

While the foregoing is directed to embodiments of the present invention, other and further embodiments of the invention may be devised without departing from the basic scope thereof. For example, other aspects may be implemented in hardware or software or in a combination of hardware and software. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is determined by the claims that follow.

## Claims

1. Electrical energy optimal routing method between a source node and a destination node of a peer-to-peer energy network, wherein said energy network being adapted for the distribution of electrical energy and comprising a plurality of connected nodes, and wherein each node comprising one or more devices including electrical energy loads and electrical components and connections for permitting the distribution of the electrical energy with other nodes of the energy network, the method comprising:
gathering, by each node of the plurality of nodes of the energy network, a set of energy statistics of each node, the set of energy statistics including information about losses in the node caused by the electrical components and connections and/or by voltage and/or current conversions occurring in the node;
communicating, by each node, the gathered set of energy statistics to a computing system; and
computing, by the computing system, a routing decision for transfer an amount of electrical energy from a source node of the electrical energy to a destination node, wherein said routing decision being computed based on the communicated set of energy statistics of all the nodes, on data identifying the source node, on data identifying the destination node, on data about the amount of electrical energy to be transferred and on data about a time by which the electrical energy needs to be transferred.

2. The method of claim 1, wherein the computing system being located in each of the nodes of the plurality of nodes.

3. The method of claim 1, wherein the computing system being located in at least one of the plurality of nodes or in a remote site, and further comprising notifying the rest of the nodes of the energy network of the computed routing decision.

4. The method of any of previous claims, wherein the one or more devices further including electrical energy storage elements including batteries and/or capacitors, and wherein the set of energy statistics further including information about a current storage level and/or storage capacity of the node.

5. The method of claim 4, wherein the set of energy statistics further including information about costs including costs charged by each node for forwarding and/or storing electrical energy.

6. The method of claim 4 or 5, wherein the set of energy statistics further including information about an estimated storage level for future times and/or a future scheduled trade.

7. The method of previous claims, wherein the set of energy statistics being communicated via a wireless communication network and/or via the electrical connections over which electrical energy is transferred.

8. The method of claim 1 or 7, wherein:
the set of energy statistics being communicated every a certain configurable period of time; or
whenever updated energy statistics are gathered in each node; or
upon each node having received a specific request for transferring the amount of electrical energy from the source node to the destination node.

9. The method of claim 1, wherein the electrical energy transfer being computed quantified as a specific rate at which to send the electrical energy in a specified time period.

10. The method of claim 4, wherein the routing decision being further computed based on an optimization criterion defined by the computing system, said optimization criterion including reducing losses experienced over the route(s) the electrical energy will flow, including losses experienced over the electrical connections as well as at nodes the energy traverses, and/or reducing the costs incurred in the transfer.

11. The method of claim 4 or 10, wherein the routing decision being further computed by considering one or more of the following criteria:
satisfying the electrical energy demand by using multiple different routes through the energy network;
using storage at intermediary node(s) of the energy network to act as a temporal buffer to reduce costs of congestion;
delaying a start of electrical energy transmission to reduce costs of congestion; and/or
pre-fetching electrical energy and storing at the destination node until needed.

12. The method of claim 2 or 3, wherein the routing decision being further computed by each node further calculating a prediction function determining when the source node will have electrical energy available and when the destination node will have demand.

13. The method of claim 1, wherein the gathered set of energy statistics being stored in a memory or database before being communicated.

14. A system for electrical energy optimal routing between a source node and a destination node of a peer-to-peer energy network, comprising:
a plurality of connected nodes of an energy network; and
at least one computing system,
wherein:
said energy network being configured and adapted for the distribution of electrical energy,
each of said plurality of nodes comprising one or more devices including electrical energy loads and electrical components and connections for permitting the distribution of the electrical energy with other nodes of the energy network,
each of the plurality of nodes being adapted and configured to gather a set of energy statistics of each node, the set of energy statistics including information about losses in the node caused by the electrical components and connections and/or by voltage and/or current conversions occurring in the node, and to communicate the gathered set of energy statistics to said at least one computing system; and
wherein said computing system being adapted and configured to compute a routing decision for transfer an amount of electrical energy from a source node of the electrical energy to a destination node, said routing decision being computed based on the communicated set of energy statistics of all the nodes, on data identifying the source node, on data identifying the destination node, on data about the amount of electrical energy to be transferred and on data about a time by which the electrical energy needs to be transferred.

15. The system of claim 14, wherein the at least one computing system being located in each of the nodes of the plurality of nodes, in at least one node of the plurality of nodes or in a remote site.
